# DEMANDE DE BREVET EUROPEEN

(11) **EP 2 143 543 A1**
(43) Date de publication de la demande: **13.01.2010**
(21) Numéro de dépôt: 08159853.4
(22) Date de dépôt: 07.07.2008
(51) Int. Cl.: B29C 49/46, B65B 3/02, B29C 49/06, B29C 49/12, B29C 49/78

(54) **Dispositif et procédé de conditionnement de liquide alimentaire**

(71) Demandeur: Nestec S.A., 1800 Vevey (CH)
(72) Inventeur: Chauvin, Guillaume, 88410 Monthureux sur Saone (FR); Chimetto, Fabio, 35016 Piazzola sul Brenta (PD) (IT); Hartwig, Klaus, 54000 Nancy (FR)

(57) **Abrégé**

L'invention concerne un dispositif de conditionnement de fluide alimentaire dans un contenant en matériau thermoplastique constitué à partir d'une préforme (110) chauffée, la préforme étant sensiblement cylindrique et positionnée dans un moule, caractérisé en ce qu'il comprend des moyens d'injection d'au moins du liquide alimentaire dans un évidement de la préforme en sorte de favoriser une expansion de la préforme à l'intérieur du moule, le moule définissant une forme du contenant, lesdits moyens d'injection comprenant une tête d'injection (18) adaptée à injecter au moins du liquide alimentaire à travers une embouchure de l'évidement, ladite tête d'injection étant intégrée au moule.

## Description

La présente invention concerne le domaine de la fabrication de contenants en matériau polymère, notamment en polyester. Plus particulièrement, elle concerne le domaine de la fabrication de bouteilles en polyester, de préférence en polyéthylène téréphtalate (PET) contenant un liquide, par exemple de l'eau minérale, ou encore une boisson aromatisée, un soda, un jus de fruit ou un yaourt liquide.

Depuis de nombreuses années, les bouteilles en PET que l'on trouve habituellement dans le commerce sont fabriquées par soufflage ou soufflage-étirage, à l'air comprimé, de préformes en PET.

Une préforme se présente habituellement sous forme de tube cylindrique fermé à l'une de ses extrémités et ouvert à son extrémité opposée. La tête de la préforme, ouverte, correspond au col du contenant.

Au cours du procédé classique de fabrication du contenant à partir d'une préforme, les préformes sont enfilées sur les plots cylindriques d'une chaîne de convoyage continue qui transporte ainsi les préformes à travers un four, essentiellement constitué par une section rectiligne bordée de chaque côté de moyens de chauffage par rayonnement, ce afin de conditionner en température la matière plastique pour l'étape de soufflage-étirage subséquente.

La préforme chaude est ensuite prélevée et transportée dans un moule d'une machine de soufflage. Le mouvement de transport est coordonné avec celui de la machine de soufflage.

Celle-ci est généralement réalisée sous la forme d'un carrousel, par exemple rotatif, tournant de manière continue autour de son axe vertical et qui porte, à sa périphérie, une série de moules identiques.

La préforme est placée dans le moule immédiatement après que celui-ci se soit ouvert et que le contenant précédemment formé soit retiré.

La préforme est préalablement chauffée de manière à être dans le moule à une température supérieure à la température de transition vitreuse (environ 100°C) afin de permettre la mise en forme par soufflage-étirage.

La température de la préforme à la fin de l'étape de chauffage est légèrement supérieure à celle requise à l'intérieur du moule de la souffleuse, ce afin de tenir compte du refroidissement qui a lieu sur la distance existant entre le lieu de chauffage et le lieu sur la distance existant entre le lieu de chauffage et le lieu du soufflage.

Grâce à la présence simultanée de plusieurs moules, une telle machine de soufflage permet de produire des contenants à des cadences très élevées, soit de l'ordre de 1000 à 2000 bouteilles par heure et par moule et par conséquent de l'ordre de plusieurs dizaines de milliers d'unités à l'heure par installation.

Le soufflage-étirage se fait par étirage à l'aide d'une tige métallique, une injection d'air se faisant à des pressions variant de 3 à 40 (3.10⁵ Pa à 4.10⁶ Pa). L'air est injecté à travers une buse dont l'extrémité est introduite à travers l'ouverture de la tête de la préforme.

Ce n'est qu'après que la bouteille a été formée que des moyens de remplissage sont mis en oeuvre, générant des mouvements mécaniques avant et après le remplissage, qui sont notamment générateurs d'éclaboussures de liquide alimentaire.

On comprend que les dispositifs ainsi utilisés nécessitent d'assez nombreuses interventions humaines au stade de l'entretien, ainsi qu'en opération quand les paramètres opérationnels nécessitent d'être réajustés.

Notamment, les fortes pressions utilisées pour le liquide alimentaire ont pour conséquence que les dispositifs connus doivent être interrompus régulièrement.

Par ailleurs, après remplissage, les contenants doivent être fermés de manière étanche, par une capsule, ou bouchon à vis ou à clipsage, un processus faiblement automatisé faisant intervenir des moyens extérieurs à la machine de soufflage-étirage.

Dans ce contexte, la présente invention a pour objet de fournir un dispositif compact permettant de conditionner en série des volumes de liquide alimentaire, de manière finalisée et en un nombre limité d'étapes, le dispositif nécessitant peu d'entretien en fonctionnement.

La demanderesse a donc mis au point un dispositif de conditionnement de fluide alimentaire dans un contenant en matériau thermoplastique constitué à partir d'une préforme chauffée, la préforme étant sensiblement cylindrique ou autre et positionnée dans un moule, le dispositif comprennant des moyens d'injection d'au moins du liquide alimentaire dans un évidement de la préforme en sorte de favoriser une expansion de la préforme à l'intérieur du moule, le moule définissant une forme du contenant, lesdits moyens d'injection comprenant une tête d'injection adaptée à injecter au moins du liquide alimentaire à travers une embouchure de l'évidement, ladite tête d'injection étant intégrée au moule.

Le fait que la tête d'injection est intégrée au moule permet d'éviter les éclaboussures de liquide alimentaire liées à la tête d'injection dans les dispositifs de l'art antérieur utilisant une tête d'injection externe, notamment quand celle-ci subit un déplacement longitudinal au cours de l'utilisation du dispositif de conditionnement.

Préférentiellement, ladite embouchure de l'évidement définissant un goulot du contenant, le dispositif comprend de plus un moyen de fixation de bouchon sur ledit goulot.

Ainsi, le liquide utilisé pour la fabrication des contenants étant le liquide à conditionner le dispositif selon l'invention, cela permet de se passer d'une étape ultérieure de remplissage et de fermeture du contenant.

Les étapes de fabrication, de remplissage et de fermeture se trouvent ainsi intégrées en une seule et même étape mise en oeuvre par un dispositif intégré.

Cette solution présente des avantages économiques importants et limite également les risques de contamination en particulier bactérienne du contenant vide ou non fermé.

Selon une caractéristique avantageuse, la tête d'injection est disposée de manière à permettre le fonctionnement du moyen de fixation de bouchon. Elle est notamment intégrée dans la station de remplissage.

Selon un mode de réalisation, le dispositif comprend de plus un moyen de mise sous pression d'un volume à injecter de liquide alimentaire.

Il est notamment prévu que ledit moyen de mise sous pression comprenne une pompe.

Il peut également comprendre un piston, éventuellement employé en combinaison.

Selon un autre mode de réalisation, non exclusif du précédent, un réservoir d'air sous pression central est utilisé.

Selon une caractéristique tout particulièrement avantageuse, le dispositif comprend de plus un système de dégazage du liquide alimentaire.

Ce moyen est préférentiellement disposé en amont du dispositif de conditionnement dans un circuit d'alimentation en liquide alimentaire.

Il est également prévu, dans un mode de réalisation, que le dispositif comprend de plus des moyens de nettoyage d'au moins une partie du moule.

Ces moyens permettent éventuellement d'éliminer les débris de matériau thermoplastique, ou les volumes de liquide alimentaire répandus dans le moule.

On notera que de manière connue en soi mais avantageuse dans le contexte de l'invention le moule peut être constitué d'un socle de moule et de deux parties supérieures de moule.

Enfin, préférentiellement, le dispositif est **caractérisé en ce qu**'il comprend de plus des moyens de formation du contenant avec de l'air jusqu'à une fraction de son volume final, et des moyens d'augmentation de la pression interne du contenant en formation effectuée à l'aide du liquide alimentaire.

On notera également que le dispositif comporte deux têtes d'injection, chacune des têtes d'injection étant intégrée au moule.

Il est avantageux qu'au moins une tête d'injection comprenne un bec au bout d'une canalisation perpendiculaire à un axe d'une cavité du moule, ladite canalisation étant reliée à un circuit d'apport d'au moins un constituant dudit liquide alimentaire.

Selon un mode de réalisation ladite canalisation est intégrée à une partie haute dudit moule.

Préférentiellement, la partie haute est composée de deux sous-parties, et que la canalisation est formée par la réunion de deux évidements complémentaires portés respectivement par une face d'interface de chaque sous-partie.

Il est notamment avantageux qu'au moins une tête d'injection soit disposée de manière à permettre un fonctionnement d'un moyen de fixation de bouchon.

Egalement, selon un aspect, une partie supérieure du moule possède au moins deux configurations, la tête d'injection étant intégrée à ladite partie supérieure, la tête d'injection étant apte à injecter du liquide alimentaire dans la préforme dans la première configuration, et le moyen de fixation de bouchon étant adapté à poser un bouchon sur le goulot d'une préforme dans la deuxième configuration.

L'invention porte également sur le procédé de mise en oeuvre industrielle du dispositif selon l'invention. Celui-ci comporte notamment une étape de pose d'une capsule sur le contenant avant une étape d'extraction du contenant hors du moule.

Il peut aussi comprendre une étape de nettoyage d'au moins une partie du moule avant une étape d'insertion d'une préforme dans le moule.

Selon une caractéristique avantageuse, le procédé comprend une étape d'injection de liquide alimentaire dans une préforme en matériau thermoplastique, ladite injection étant effectuée à travers une tête d'injection intégrée au moule.

Préférentiellement, le procédé comprend de plus une étape de formation du contenant avec de l'air jusqu'à une fraction de son volume final, par exemple supérieure à 70% suivie d'une étape d'augmentation de la pression effectuée à l'aide du liquide alimentaire.

En effet, l'air n'est pas autant capable que le liquide de refroidir le matériau thermoplastique en expansion. Cette caractéristique a donc pour avantage d'offrir un procédé plus stable et une fenêtre de mise en oeuvre du procédé élargie.

L'invention va maintenant être décrite en détails, en référence aux figures annexées, relatives à des modes de réalisation donnés à titre d'exemple.
La figure 1 présente un schéma général des principes de fonctionnement d'une installation mettant en oeuvre l'invention.
La figure 2 représente un dispositif de conditionnement de liquide alimentaire selon l'invention, représenté en coupe et en perspective, une préforme de PET étant disposée dans le moule, et la canne d'étirage étant disposée en position haute.
La figure 3 présente un autre aspect d'un dispositif de conditionnement de liquide alimentaire selon l'invention, représenté en coupe et en perspective, la canne d'étirage étant disposée en position haute.
La figure 4 présente le même aspect d'un dispositif de conditionnement de liquide alimentaire, au cours d'une étape d'encapsulage de la bouteille.

Le mode de réalisation donné ici à titre d'exemple se rapporte à un procédé de fabrication de bouteilles d'eau minérale en PET à partir d'une préforme chauffée. La préforme se présente sous la forme d'un tube cylindrique fermé à son extrémité inférieure. La tête de la préforme ouverte correspond au col de la bouteille, qui est un goulot sur lequel on visse une capsule de fermeture.

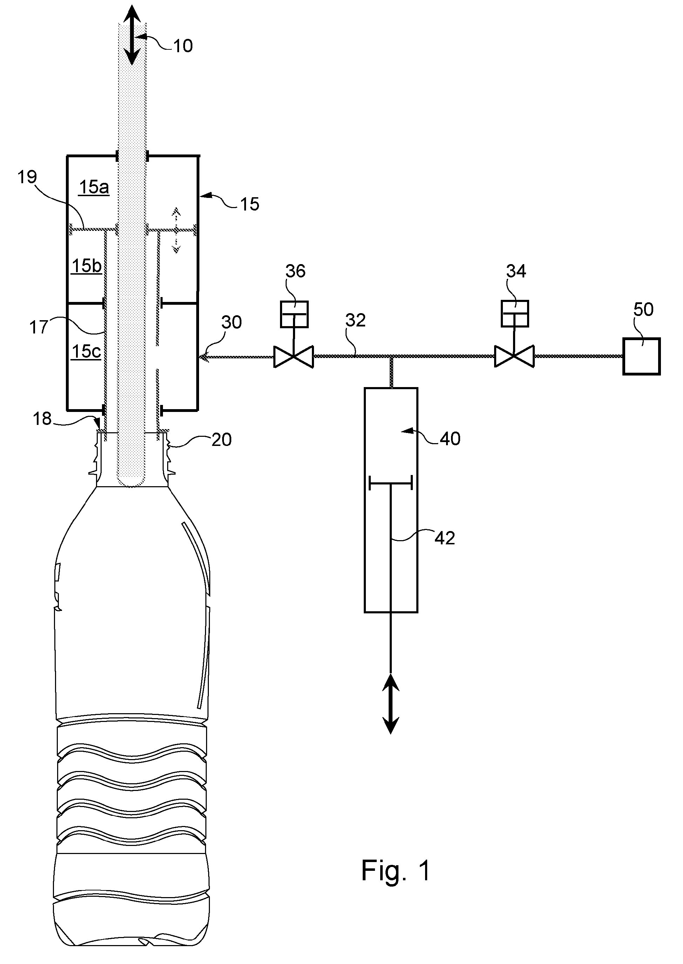

En référence à la figure 1, une canne d'étirage 10 est insérée dans un vérin 15 à air comprimé. La canne d'étirage 10 est commandée par un moteur d'étirage qui lui donne un mouvement longitudinal (représenté par une flèche).

La canne d'étirage est commandée de manière pneumatique (vérin et came), ou alternativement ou en combinaison, de manière électrique. Une commande à l'aide d'un vérin est privilégiée, et utilisé dans le mode de réalisation préféré de l'invention.

Le vérin 15 à air comprimé comprend un cylindre 17 commandant une tête d'injection 18, que traverse la canne d'étirage 10. La tête d'injection 18 est reliée au col 20 d'une préforme de PET, placée dans un moule (non représenté) et qui, après expansion, prend la forme d'une bouteille d'eau minérale, cette forme étant déterminée par la paroi du moule.

Le vérin comprend trois chambres, les deux chambres supérieures 15a et 15b étant remplies d'air comprimé. Entre ces deux chambres supérieures, une paroi de piston 19 coulisse dans une direction parallèle à la canne d'étirage (déplacement représenté par une flèche). Cette paroi 19 est traversée en son centre par la canne d'étirage 10.

Le vérin à air comprimé comprend également une entrée latérale 30 de liquide alimentaire, ici de l'eau minérale reliée à la troisième chambre 15c du vérin, qui est la chambre inférieure. Le liquide est amené par une canalisation 32.

Une arrivée externe d'eau minérale amène le liquide via l'extrémité distante de cette canalisation 32 à une première soupape 34 qui est reliée à l'ouverture d'un cylindre de remplissage 40 à chambre unique comprenant un piston 42 commandé par un moteur de remplissage (mouvement représenté par une flèche). Ce moteur donne au piston un mouvement longitudinal dans la chambre unique du cylindre de remplissage 40.

Avant de passer dans la première soupape, l'eau minérale est préalablement désaérée par un système de désaération 50 en amont qui permet de contrôler la saturation en air de l'eau minérale.

En série derrière la première soupape 34 et l'ouverture du cylindre de remplissage 40, sur la canalisation 32, se trouve une deuxième soupape 36. La canalisation 32 débouche ensuite dans la chambre inférieure 15c du vérin à air comprimé 15.

La chambre inférieure 15c du vérin à air comprimé est traversée par le cylindre de commande 17 de la tête de remplissage 18, dont le volume interne débouche à travers la sortie inférieure du vérin à air comprimé 15 dans la tête de remplissage 18. Le cylindre de commande comprend une ouverture latérale permettant la circulation du liquide alimentaire entre la chambre inférieure du vérin et l'intérieur du cylindre de commande.

La canne d'étirage 10 traverse quant à elle le cylindre de commande 17 jusqu'à la tête de remplissage 18 et le goulot 20 de la préforme de bouteille.

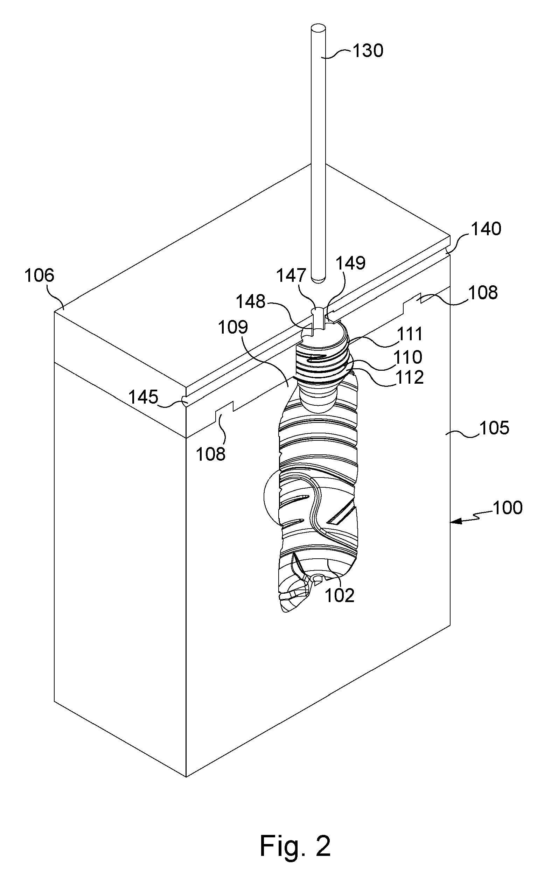

Sur la figure 2, un demi-moule 100 est représenté, une préforme 110 de PET étant positionnée dans la partie haute de la cavité du demi-moule qui a une forme générale cylindrique, avec un fond 102 en partie basse. Un deuxième demi-moule non représenté permet de compléter le moule et d'immobiliser la préforme dans la cavité fermée formée par les cavités des deux demi-moules, la cavité fermée définissant une forme de bouteille de liquide alimentaire.

On note que le demi-moule 100 comprend une partie basse 105 et une partie haute 106, la partie haute 106 étant fixée sur la partie basse via deux rails 108 formant protubérances sur la face supérieure de la partie haute 106, les deux rails étant parallèles l'un à l'autre, de part et d'autre de la cavité du moule, perpendiculairement au plan de coupe. La cavité du moule est principalement contenue dans la partie basse du moule.

La préforme 110 comporte un goulot 111 déjà formé présentant un pas de vis externe pour recevoir un bouchon. Le goulot 111 est positionné dans un rétrécissement 109 de la cavité du demi-moule, adapté à l'immobiliser, tout en étant complémentaire de la forme de la bouteille finale. On note que ce rétrécissement 109 est juste en dessous de la face supérieure de la partie basse du moule, et que le goulot est ainsi en contact à la fois avec la partie haute 106 du moule et avec sa partie basse 105. Le pas de vis du goulot est en contact avec la paroi d'une cavité globalement cylindrique de la partie haute 106 du moule. Le goulot possède de plus une collerette 112 qui est positionnée exactement à l'interface entre la partie haute 106 et la partie basse 105 du moule.

Dans le prolongement du goulot, dans la direction du fond 102 de la cavité, la préforme comporte un évidement (masqué sur la figure), celui-ci se terminant par un fond.

La surface interne de la cavité du moule est structurée de manière à définir la structure externe d'une bouteille de liquide alimentaire, ici une bouteille d'eau minérale. Cette structure comporte des rainures circulaires, dont certaines ont un rôle structurel ou fonctionnel comme par exemple permettre la préhension par un utilisateur ou permettre une flexibilité lors de l'utilisation ou en vue de l'élimination de la bouteille après usage.

Le moule comporte dans sa partie haute deux canalisations 140 et 145 rectilignes de section circulaire dans le prolongement l'une de l'autre, perpendiculaires à l'axe de la cavité du moule, correspondant à l'axe de la bouteille une fois formée. Les deux canalisations sont disposées de part et d'autre du haut du goulot de la préforme, et sont débouchantes au-dessus de celui-ci de telle sorte qu'un liquide injecté dans l'une ou l'autre de ces canalisations débouche dans le goulot de la préforme. On note que les deux canalisations sont dans le plan de coupe du moule, et qu'elles sont donc formées par la réunion du demi-moule représenté et du demi-moule complémentaire.

Une canne d'étirage 130 est positionnée en partie haute de la figure, dans le prolongement de l'axe de la préforme et de l'axe de l'évidement du moule. Une ouverture cylindrique 147 dans la partie haute du moule et d'axe aligné à l'axe de la préforme permet l'introduction de la canne d'étirage 130 dans le moule et dans l'évidement de la préforme, jusqu'à ce que l'extrémité de la canne entre en contact avec le fond de l'évidement pour provoquer l'étirage de la préforme.

On note qu'au dessus du goulot, le moule présente deux becs 148 et 149 à la sortie des conduites 145 et 140, permettant d'orienter le fluide injecté respectivement par les conduites 145 et 140 vers l'intérieur de la préforme à travers son goulot, faisant ainsi suivre un virage à 90° au fluide. Les deux becs 148 et 149 séparent également l'intérieur des conduites de l'intérieur de l'ouverture cylindrique 147.

Au cours du procédé d'utilisation du dispositif décrit, la température de la préforme est préalablement amenée à une valeur comprise entre 50°C et 130°C, voire entre 75°C et 100°C. Dans le mode préféré cette valeur est de 95°C, le plastique utilisé étant du PET.

La canne a une vitesse comprise entre 0.5 et 3.0 m.s⁻¹, voire entre 1.0 et 2.5 m.s⁻¹. Dans le mode préféré cette valeur est de 1.6 m.s⁻¹.

La température du liquide alimentaire est préalablement amenée à une valeur comprise entre 1 et 120°C, préférentiellement entre 10 et 90°C. Dans le mode préféré cette valeur est de 30 °C.

Le rapport d'allongement longitudinal du matériau thermoplastique est compris entre 2 et 5, voire entre 2.5 et 4. Dans le mode préféré cette valeur est de 3.5.

Le rapport d'allongement radial du matériau thermoplastique est compris entre 2 et 7, voire entre 3 et 4.5. Dans le mode préféré cette valeur est de 4.

Le matériau thermoplastique est choisi dans le groupe constitué des polyethyleneterephtalates, des polypropylènes, des polyéthylènes, des polycarbonates, des polystyrènes, des acides polylactiques, des polychlorures de vinyle et de leurs combinaisons. Dans le mode préféré, il s'agit de PET.

La température du moule est inférieure d'au moins 50°C à la température de fusion du matériau thermoplastique, qui est dans le cas du PET de 230°C. De préférence, elle est maintenue en-dessous de 100°C. La température du moule est dans le mode préféré égale à la température ambiante.

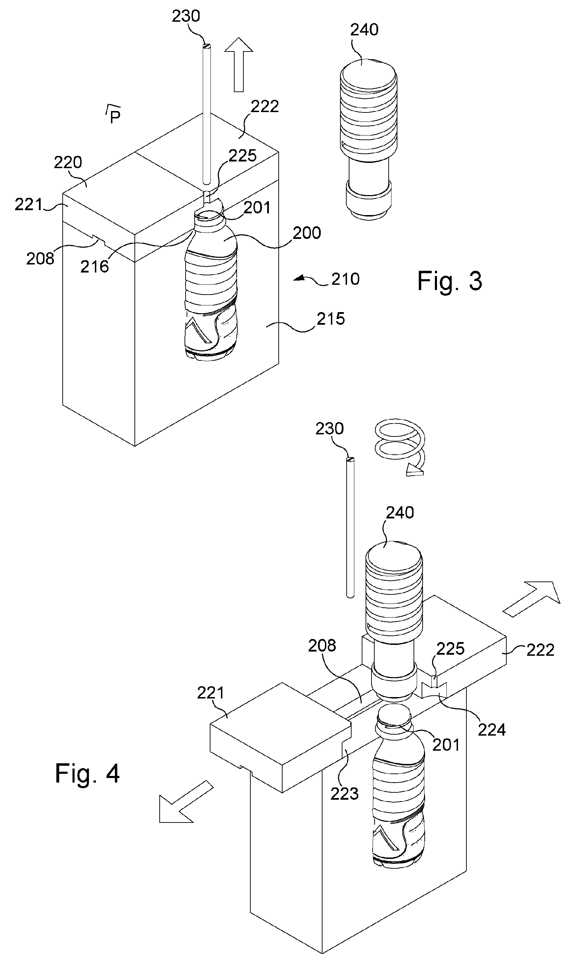

En référence à la figure 3, une bouteille 200 remplie d'eau minérale est présente dans le moule 210 (représenté en coupe), à l'issue d'une phase d'expansion de la préforme de PET et de remplissage de la bouteille. Par rapport à la figure 2, l'angle de vue est modifié de 90°, et on reconnaît un rail 208 correspondant à un des rails 108 de la figure 2.

On a fait figurer sur la représentation du moule le fait que sa partie supérieure 220 est composée de deux sous-parties 221 et 222 symétriques l'une de l'autre par rapport à un plan de symétrie P passant par l'axe de la canne d'étirage 230, l'axe de la cavité du moule et l'axe de la bouteille. Les deux sous-parties sont d'ailleurs en contact le long du plan de symétrie, sauf au-dessus du goulot 201 de la bouteille, où un orifice 225 (correspondant à l'ouverture 147 en figure 2) est ménagé pour laisser passer la canne d'étirage.

Comme précédemment, la partie inférieure 215 du moule comporte une cavité dans la forme correspond à celle d'une bouteille d'eau minérale, le goulot 201 de la bouteille débordant de la cavité de la partie inférieure, à travers un rétrécissement 216 de la cavité correspondant à l'arrondi de la partie supérieure de la bouteille.

On note que le goulot 201 de la bouteille est entouré par la partie supérieure 220 du moule.

Sur la figure 3, on a aussi représenté le mouvement de retrait de la canne d'étirage 230 après la phase d'expansion (flèche verticale). On a également représenté l'approche d'un dispositif d'encapsulage 240 venant se positionner dans le prolongement de l'axe de la bouteille, au-dessus du goulot de celle-ci.

En référence à la figure 4, les deux sous-parties 221 et 222 du la partie supérieure du moule sont écartées latéralement (flèches horizontales) et laissent un accès au goulot 201 de la bouteille. On distingue les deux sous-parties 223 et 224 de la cavité de la partie supérieure du moule dans laquelle était logé le goulot de la bouteille dans la position représentée en figure 3. On note que cette cavité est co-axiale avec l'orifice 225, qui la prolonge vers l'extérieur du moule. On note aussi que le goulot de la bouteille possède sur sa surface extérieure, qui est cylindrique, un filetage permettant de placer une capsule.

Le mouvement des deux sous-parties est guidé par le rail 208 porté par la face supérieure de la partie inférieure du moule. La canne d'étirage 230 est également positionnée à l'écart de l'aplomb de la bouteille.

Le dispositif d'encapsulage est alors positionné à la verticale du goulot de la bouteille. Il entre ensuite en rotation (représentée par une flèche courbe) et procède à la pose d'une capsule sur le goulot de la bouteille.

Bien entendu l'invention n'est pas limitée au mode de réalisation décrit et représenté par les dessins annexés et s'étend à toutes les variantes envisageables par l'homme du métier dans le cadre des revendications.

## Revendications

1. Dispositif de conditionnement de fluide alimentaire dans un contenant en matériau thermoplastique constitué à partir d'une préforme chauffée, la préforme étant positionnée dans un moule, **caractérisé en ce qu'**il comprend des moyens d'injection d'au moins du liquide alimentaire dans un évidement de la préforme en sorte de favoriser une expansion de la préforme à l'intérieur du moule, le moule définissant une forme du contenant, lesdits moyens d'injection comprenant une tête d'injection adaptée à injecter au moins un composant du liquide alimentaire à travers une embouchure de l'évidement, ladite tête d'injection étant intégrée au moule.

2. Dispositif selon la revendication 1, **caractérisé en ce qu'**il comprend de plus des moyens de formation du contenant avec de l'air jusqu'à une fraction de son volume final, et des moyens d'augmentation d'une pression interne du contenant en formation effectuée à l'aide du liquide alimentaire.

3. Dispositif selon la revendication 1 ou la revendication 2, **caractérisé en ce que** ladite embouchure de l'évidement définissant un goulot du contenant, le dispositif comprend de plus un moyen de fixation de bouchon sur ledit goulot.

4. Dispositif selon l'une des revendications 1 à 3, **caractérisé en ce qu'**il comprend de plus un moyen de mise sous pression d'un volume à injecter de liquide alimentaire.

5. Dispositif selon la revendication 4, **caractérisé en ce que** ledit moyen de mise sous pression comprend une pompe.

6. Dispositif selon la revendication 4 ou la revendication 5 **caractérisé en ce que** ledit moyen de mise sous pression comprend un piston.

7. Dispositif selon l'une des revendications 4 à 6, **caractérisé en ce que** ledit moyen de mise sous pression comprend un réservoir d'air sous pression central.

8. Dispositif selon l'une des revendications 1 à 7, **caractérisé en ce qu'**il comprend de plus un système de dégazage du liquide alimentaire.

9. Dispositif selon l'une des revendications 1 à 8, **caractérisé en ce qu**'il comprend de plus des moyens de nettoyage d'au moins une partie du moule.

10. Dispositif selon l'une des revendications 1 à 9, **caractérisé en ce que** le moule est constitué d'un socle de moule et de deux parties supérieures de moule.

11. Dispositif selon l'une des revendications 1 à 10, **caractérisé en ce qu'**il comporte deux têtes d'injection, chacune des têtes d'injection étant intégrée au moule.

12. Dispositif selon l'une des revendications 1 à 11, **caractérisé en ce qu'**au moins une tête d'injection comprend un bec au bout d'une canalisation perpendiculaire à un axe d'une cavité du moule, ladite canalisation étant reliée à un circuit d'apport d'au moins un constituant dudit liquide alimentaire.

13. Dispositif selon la revendication 12, **caractérisé en ce que** ladite canalisation est intégrée à une partie haute dudit moule.

14. Dispositif selon la revendication 13, **caractérisé en ce que** ladite partie haute est composée de deux sous-parties, et que la canalisation est formée par la réunion de deux évidements complémentaires portés respectivement par une face d'interface de chaque sous-partie.

15. Dispositif selon l'une des revendications 1 à 14, **caractérisé en ce qu'**au moins une tête d'injection est disposée de manière à permettre un fonctionnement d'un moyen de fixation de bouchon.

16. Dispositif selon la revendication 15, **caractérisé en ce qu'**une partie supérieure du moule possède au moins deux configurations, la tête d'injection étant intégrée à ladite partie supérieure, la tête d'injection étant apte à injecter du liquide alimentaire dans la préforme dans la première configuration, et le moyen de fixation de bouchon étant adapté à poser un bouchon sur le goulot d'une préforme dans la deuxième configuration.

17. Procédé de mise en oeuvre industrielle du dispositif selon l'une des revendications 1 à 15.

18. Procédé selon la revendication 17, **caractérisé en ce qu'**il comprend une étape d'injection de liquide alimentaire dans une préforme en matériau thermoplastique, **caractérisé en ce que** ladite injection est effectuée à travers une tête d'injection intégrée au moule.
